# EUROPÄISCHE PATENTANMELDUNG

(11) **EP 3 910 034 A1**
(43) Veröffentlichungstag der Anmeldung: **17.11.2021**
(21) Anmeldenummer: 20174610.4
(22) Anmeldetag: 14.05.2020
(51) Int. Cl.: C09D 5/18, C09D 7/47, C09D 7/48, C09D 7/65

(54) **BRANDSCHUTZZUSAMMENSETZUNG MIT HOHEM FESTSTOFFANTEIL FÜR BRANDSCHUTZBESCHICHTUNGEN MIT VERBESSERTEN OBERFLÄCHENEIGENSCHAFTEN**

(71) Anmelder: Hilti Aktiengesellschaft, 9494 Schaan (LI)
(72) Erfinder: MAYR, Florian, 86444 Affing (DE); FARRAS GUTIERREZ, Hector, 86507 Oberottmarshausen (DE); SIMON, Sebastian, 86807 Buchloe Lindenberg (DE); PACHMAYR, Ursula, 86916 Kaufering (DE)
(74) Vertreter: Hilti Aktiengesellschaft Corporate Intellectual Property

(57) **Zusammenfassung**

Die vorliegende Erfindung betrifft eine Brandschutzzusammensetzung, insbesondere eine Brandschutzzusammensetzung mit intumeszierenden Eigenschaften, die ein Bindemittel auf Basis einer wasserbasierten Dispersion enthält, sowie deren Verwendung für den Brandschutz, insbesondere für Beschichtungen von Bauteilen, wie Stützen, Trägern, oder Fachwerkstäben. Die Erfindung betrifft ferner eine aus der Brandschutzzusammensetzung hergestellte Beschichtung sowie ein mit der Beschichtung überzogenes Substrat, Die erfindungsgemäße Brandschutzbeschichtung zeichnet sich durch einen hohen Feststoffanteil bei gleichzeitig verbesserten Oberflächeneigenschaften aus.

## Beschreibung

Die vorliegende Erfindung betrifft eine Brandschutzzusammensetzung, insbesondere eine Brandschutzzusammensetzung mit intumeszierenden Eigenschaften, die ein Bindemittel auf Basis einer wasserbasierten Dispersion enthält, sowie deren Verwendung für den Brandschutz, insbesondere für Beschichtungen von Bauteilen, wie Stützen, Trägern, oder Fachwerkstäben. Die Erfindung betrifft ferner eine aus der Brandschutzzusammensetzung hergestellte Beschichtung sowie ein mit der Beschichtung überzogenes Substrat, Die erfindungsgemäße Brandschutzbeschichtung zeichnet sich durch einen hohen Feststoffanteil bei gleichzeitig verbesserten Oberflächeneigenschaften aus.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. die sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren bereits verschiedene Systeme, wobei ein großer Teil der am Markt erhältlichen Produkte auf Basis von wässrigen Dispersionen basiert.

In der Patentschrift WO2019/099372 A1 werden wässrige Beschichtungszusammensetzungen auf Basis von polymeren Bindemitteln mit mindestens einem Koaleszenzmittel und mit einem oder mehreren Additiven aus der Gruppe der Intumeszenzadditive, der Antivibrationsadditive sowie der schallentkoppelnde Additive beschrieben. Dabei wird das polymere Bindemittel in einer ersten Komponente und das Koagulationsmittel in einer zweiten Komponente bereitgestellt. Das (die) Additiv(e) können in der ersten Komponente, in der zweiten Komponente oder sowohl in der ersten als auch in der zweiten Komponente enthalten sein. Bei direkt aufeinanderfolgender oder simultaner Applikation der beiden Komponenten auf ein zu beschichtendes Substrat wird innerhalb von 30 Sekunden nach Auftrag eine Beschichtung ausgebildet, die haftend, wasserbeständig sowie trocken (Klebrigkeit) ist.

Die in der WO 2019/099372 A1 offenbarten Zusammensetzungen zeigen in Bezug auf intumeszierende Beschichtungen eine schnelle Aushärtung und erlauben eine hohe Beschichtungsdicke. Die entsprechenden Zusammensetzungen zeigen jedoch Nachteile hinsichtlich der Stabilität der Aschekruste im Brandfall sowie hinsichtlich ihrer Oberflächenbeschaffenheit. Zur Verbesserung der Stabilität der Aschekruste im Brandfall wird üblicherweise der Anteil an intumeszierenden Additiven in der Zusammensetzung erhöht und es kommen üblicherweise mehr als 50 Gew.-% bezogen auf das Gesamtgewicht der Zusammensetzung zum Einsatz. Der daraus resultierende hohe Feststoffanteil führt jedoch dazu, dass die Oberflächenrauigkeit der resultierenden ausgehärteten Beschichtung, insbesondere wenn die Zusammensetzung per Hand oder Sprühen appliziert wurde, mit steigendem Feststoffanteil zunimmt. Mit zunehmender Oberflächenrauigkeit nimmt der Glanz der ausgehärteten Beschichtung ab. Im Sinne der vorliegenden Erfindung wird die Kombination aus Oberflächenrauigkeit und Glanz zusammenfassend als Oberflächeneigenschaft bezeichnet. Eine niedrige Oberflächenrauigkeit und ein hoher Glanz entsprechen demnach einer sehr guten Oberflächeneigenschaft.

In öffentlich zugänglichen Einrichtungen, wie Sportstadien, Wolkenkratzern, Flughäfen, Bahnhöfen oder Verwaltungsgebäuden, aber auch im privaten Bereich wird u.a. aus Kostengründen immer häufiger auf einen ästhetischen Deckanstrich verzichtet, so dass Brandschutzbeschichtungen immer häufiger auch ästhetische Gesichtspunkte erfüllen müssen und daher gute bis sehr gute Oberflächeneigenschaften aufweisen müssen.

Es besteht Bedarf an einer Zusammensetzung, die trotz eines hohen Feststoffanteils von 50 Gew.-% und mehr bezogen auf das Gesamtgewicht der Zusammensetzung, eine gute Verarbeitbarkeit zeigt. Die aus der Zusammensetzung hergestellte Beschichtung soll zudem eine gute Feuerwiderstandsdauer aufweisen und gute bis sehr gute Oberflächeneigenschaften, insbesondere eine geringe Oberflächenrauigkeit und ansprechende Glanzeigenschaften, aufweisen.

Die der Erfindung zugrundeliegende Aufgabe wird durch eine Brandschutzzusammensetzung (oder einfach Zusammensetzung) gemäß Anspruch 1 gelöst. Vorteilhafte Ausgestaltungen ergeben sich aus den Unteransprüchen, welche wahlweise miteinander kombiniert werden können.

Die erfindungsgemäße Brandschutzzusammensetzung umfasst eine erste Komponente und eine zweite Komponente, wobei die erste Komponente ein polymeres Bindemittel umfassend ein hyperverzweigtes Polymer oder ein Polymer mit einem kovalent gebundenen Tensid enthält und die zweite Komponente ein Koaleszenzmittel enthält. Die Brandschutzzusammensetzung, welche durch Vermischen der ersten und der zweiten Komponente entsteht, umfasst mindestens ein dämmschichtbildendes Brandschutzadditiv und mindestens ein Verlaufsadditiv, welche vor dem Vermischen der ersten und der zweiten Komponente in der ersten und/oder in der zweiten Komponente enthalten sein können. Erfindungsgemäß weist die Brandschutzzusammensetzung einen Feststoffanteil von mindestens 50 Gew.-% auf bezogen auf das Gesamtgewicht der Brandschutzzusammensetzung.

Die erste Komponente umfasst ein polymeres Bindemittel umfassend ein hyperverzweigtes Polymer oder ein Polymer mit einem kovalent gebundenen Tensid.

Das hyperverzweigte Polymer kann das Reaktionsprodukt eines säurefunktionellen Harzes und eines Epoxids enthalten, wobei das hyperverzweigte Polymer eine Carboxylgruppe, eine Hydroxylgruppe, eine Aminogruppe, eine Uredogruppe, eine Acetoacetoxygruppe, eine Diacetongruppe oder eine Kombination von zwei oder mehr davon umfasst. In einigen Ausführungsformen umfasst das hyperverzweigte Polymer eine oder mehrere Hydroxylgruppen.

In einigen Ausführungsformen kann das säurefunktionelle Harz ein teilweise neutralisiertes säurefunktionelles Harz sein, wobei das teilweise neutralisierte säurefunktionelle Harz das Reaktionsprodukt des säurefunktionellen Harzes und mindestens eines funktionalisierten Amins ist. In einigen Ausführungsformen werden die Säuregruppen auf dem säurefunktionellen Harz zumindest teilweise neutralisiert, bevor die Säuregruppen auf dem säurefunktionellen Harz an das Epoxid gebunden werden. In einigen Ausführungsformen werden mindestens etwa 5 Mol-% der Säuregruppen auf dem säurefunktionellen Harz neutralisiert. In einigen Ausführungsformen sind bis zu etwa 95 Mol-% der Säuregruppen des säurefunktionellen Harzes an das Epoxid gebunden.

Das säurefunktionelle Harz kann ein säurefunktionelles Acrylharz, ein Styrol-Acrylharz, ein nicht acrylsäurefunktionelles Harz, ein hybrides acrylsäurefunktionelles Harz, ein säurefunktioneller Polyester, ein säurefunktionelles Polyamid, ein säurefunktionelles Wachs oder ein Hybridcopolymer davon sein. Hybridharze umfassen Copolymere (z. B. Blockcopolymere), die zwei oder mehr kovalent gebundene Homopolymere oder Copolymere enthalten. In einigen Ausführungsformen kann das säurefunktionelle Harz ein oder mehrere polymerisierte Monomere enthalten, ausgewählt aus der Gruppe bestehend aus 2-Hydroxyethylacrylat, 2-Hydroxyethyl, Methacrylat, 2,3-Hydroxypropylacrylat, 2,3-Hydroxypropylmethacrylat, 2,4-Hydroxybutylacrylat, 2,4-Hydroxybutylmethacrylate, Methylacrylat, Ethylacrylat, n-Propylacrylat, i-Propylacrylat, n-Butylacrylat s-Butylacrylat, i-Butylacrylat, t-Butylacrylat, n-Amylacrylat, i-Amylacrylat, Isobomylacrylat, n-Hexylacrylat, 2-Ethylbutylacrylat, 2-Ethylhexylacrylat, n-Octylacrylat, n -decylacrylat, Methylcyclohexylacrylat, Cyclopentylacrylat, Cyclohexylacrylat, Methylmethacrylat, Ethylmethacrylat, 2-Hydroxyethylmethacrylat, n-Propylmethacrylat, n-Butylmethacrylat, i-Propylmethacrylat, i-Butylmethacrylat, n-Amylmethacrylat, n-Amylmethacrylat i-Amylmethacrylat, s-Butylmethacrylat, t-Butylmethacrylat, 2-Ethylbutylmethacrylat, Methylcyclohexylmethacrylat, Cinnamylmethacrylat, Crotylmethacrylat, Cyclohexylmethacrylat, Cyclopentylmethacrylat, 2-Ethoxyethylmethacrylat und Isobornylmethacrylat.

In einigen Ausführungsformen kann das Epoxid mehrere Epoxidgruppen aufweisen. In einigen Ausführungsformen kann das Epoxid ein Polyepoxid-funktionelles Polymer enthalten, ein monoepoxy-funktionelles Polymer oder eine Kombination davon. Das Polyepoxy-funktionelle Polymer kann ein Epoxyäquivalentgewicht von etwa 100 Äq./kg bis etwa 1000 Äq./kg aufweisen. Das Polyepoxy-funktionelle Polymer kann ein Diglycidylesterpolymer, ein Glycidylaminpolymer, ein Cyclohexandimethanol-Diglycidyletherpolymer, ein Polypropylenoxid-Diglycidyletherpolymer, ein Bisphenol-A-Diglycidyletherpolymer, ein Bisphenol-F-Diglycidyletherpolymer oder eine Mischung von zwei oder mehr davon umfassen. Das monoepoxyfunktionelle Polymer kann ein Glycidyletherpolymer, ein Glycidylesterpolymer, ein Glycidylaminpolymer oder eine Mischung von zwei oder mehr davon umfassen. In einigen Ausführungsformen kann das Monoepoxy-funktionelle Polymer ein Glycidylmethacrylat, einen Glycidylester der Neodecansäure, einen Bisphenol-A-Monoglycidylether, einen 2-Ethylhexylglycidylether oder eine Mischung von zwei oder mehr davon umfassen. Das monoepoxyfunktionelle Polymer kann eine oder mehrere Hydroxylgruppen enthalten.

In einigen Ausführungsformen umfasst das funktionalisierte Amin eine Hydroxyl-, Cyano-, Carboxyl-, Nitro-, Heteroarylgruppe oder eine Kombination von zwei oder mehr davon.

Das funktionalisierte Amin kann eine Verbindung enthalten, die durch die Formel (I), die Formel (II), die Formel (III) oder eine Mischung von zwei oder mehr davon dargestellt wird: 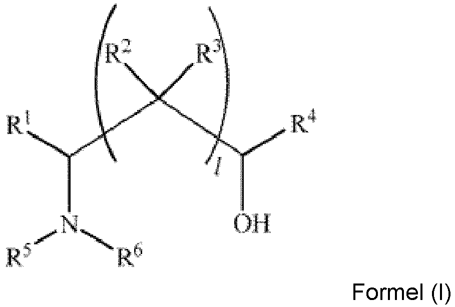 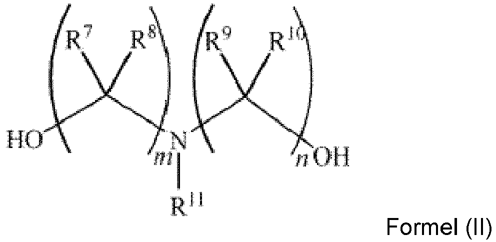 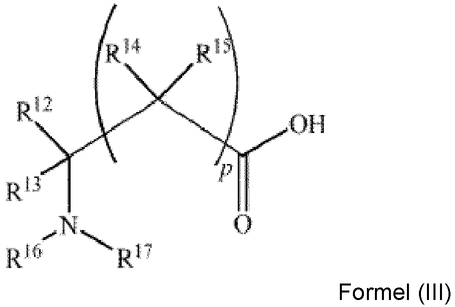 wobei
R¹, R², R³, R⁴, R⁵, R⁶, R⁷, R⁸, R⁹, R¹⁰ und R¹¹ jeweils unabhängig voneinander eine Wasserstoff- oder C₁-C₆-Alkylgruppe sind;
R¹², R¹³, R¹⁴, R¹⁵, R¹⁶ und R¹⁷ jeweils unabhängig voneinander Wasserstoff, Hydroxyl, Halogen, Carboxyl, Amido, Ester, Thiol, Alkylthio, Guanadin oder eine C₁-C₆-Alkyl-, C₃-C₁₀-Cycloalkyl-, C₃-C₁₀-Heterocycloalkyl-, C₅-C₁₂-Aryl- oder C₅-C₁₂-Heteroarylgruppe sind; /und p sind jeweils unabhängig voneinander 0, 1, 2, 3, 4 oder 5; und m und n sind jeweils unabhängig voneinander 1, 2, 3, 4 oder 5.

In einigen Ausführungsformen umfasst das funktionalisierte Amin Ethanolamin, Triethanolamin, 3-Amino-1-propanol, Amino-2-propanol, 4-Amino-1-butanol, 3-Amino-1-butanol, 2-Amino-1-butanol, 5-Amino-1-pentanol, Methyldiethanolamin, Dimethylethanolamin oder eine Mischung aus zwei oder mehr davon. Bevorzugt umfasst das funktionalisierte Amin Ethanolamin, Triethanolamin, Methyldiethanolamin, Dimethylethanolamin oder eine Mischung von zwei oder mehr davon.

In einigen Ausführungsformen umfasst das säurefunktionelle Harz das Polymerisationsprodukt einer Mischung von Monomeren, einschließlich eines Styrolmonomers und eines Monomers der Formel V, Maleinsäureanhydrid, Itaconsäure, eines Esters von Itaconsäure oder einer Mischung von zwei oder mehr davon, mit: 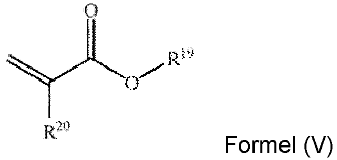 Wobei R²⁰ Wasserstoff oder CH₃ ist und R¹⁹ eine Wasserstoff-, Alkyl-, Cycloalkyl-, Aryl- oder Alkarylgruppe ist. In einigen Ausführungsformen kann R¹⁹ ein C₁-C₂₀-Alkyl, ein C₃-C₂₀-Cycloalkyl, C₅-C₁₂-Aryl oder eine C₅-C₂₀-Alkarylgruppe sein.

In einigen Ausführungsformen hat das säurefunktionelle Harz ein zahlenmittleres Molekulargewicht (Mₙ) von etwa 1000 g/mol bis etwa 100.000 g/mol. In einigen Ausführungsformen hat das säurefunktionelle Harz ein zahlenmittleres Molekulargewicht (Mₙ) von etwa 1000 g/mol bis etwa 10.000 g/mol. In einigen Ausführungsformen hat das säurefunktionelle Harz ein zahlenmittleres Molekulargewicht (Mₙ) von etwa 2500 g/mol bis zum säurefunktionellen Harzgelpunkt. In einigen Ausführungsformen hat das säurefunktionelle Harz ein gewichtsmittleres Molekulargewicht (M_{w}) von etwa 2000 g/mol bis etwa 1.000.000 g / mol.

In einigen Ausführungsformen hat das hyperverzweigte Polymer eine Säurezahl von etwa 15 mg KOH/g bis etwa 300 mg KOH/g. In einigen Ausführungsformen hat das hyperverzweigte Polymer eine Säurezahl von etwa 20 mg KOH/g bis etwa 250 mg KOH/g. In einigen Ausführungsformen hat das hyperverzweigte Polymer eine Hydroxylzahl von etwa 1 mg KOH/g bis etwa 300 mg KOH/g. In einigen Ausführungsformen hat das hyperverzweigte Polymer eine Hydroxylzahl von etwa 10 mg KOH/g bis etwa 250 mg KOH/g.

In einigen Ausführungsformen kann das hyperverzweigte Polymer ein Mikrogel sein. Der Begriff Mikrogel im Sinne der Erfindung bezeichnet Dispersionen von Polymerteilchen, die intern ohne nennenswerte Vernetzung in der kontinuierlichen Phase vernetzt sind, um Dispersionen mit niedrigerer Viskosität und höherem Feststoffgehalt bereitzustellen. Üblicherweise bilden Mikrogele bei der Filmbildung ein kontinuierliches Netzwerk.

In einigen Ausführungsformen umfasst das Polymer, das ein kovalent gebundenes Tensid enthält, ein oder mehrere polymerisierte Monomere, einschließlich Acrylsäure, Methacrylsäure, Alkylacrylat, Alkylmethacrylat, Acrylnitril, Styrol, Vinyl enthaltende Monomere oder eine Kombination von zwei oder mehr davon. In einigen Ausführungsformen umfassen das eine oder die mehreren polymerisierten Monomere Acrylsäure, Methacrylsäure, C₁-C₄-Alkylacrylat, C₁-C₄-Alkylmethacrylat, C₁-C₄-Hydroxyalkylacrylat, C₁-C₄-Hydroxyalkylmethacrylat, Acrylnitril, Styrol, Vinyl enthaltende Monomere oder eine Kombination von zwei oder mehr davon. In einigen Ausführungsformen kann das Polymer, das ein kovalent gebundenes Tensid enthält, ein Copolymer sein. In einigen Ausführungsformen umfasst das Polymer, das ein kovalent gebundenes Tensid enthält, n-Butylacrylat-Acrylnitril-Styrol-Copolymer, n-Butylacrylat-Methylmethacrylat-Methacryl-Hydroxymethacrylat-Styrol-Copolymer, Styrol-AcrylCopolymer, Styrol-Butadien-Copolymer, Vinyl Copolymer oder eine Kombination von zwei oder mehr davon. In einigen Ausführungsformen umfasst das Polymer, das ein kovalent gebundenes Tensid enthält, ein Acrylpolymer.

Das kovalent gebundene Tensid kann ein anionisches Tensid enthalten. Vorzugsweise umfasst das anionische Tensid eine Sulfat-, Sulfonat-, Carboxylat- oder Phosphatgruppe, bevorzugt eine Sulfatgruppe.

Vor der kovalenten Bindung an das Polymer kann das Tensid eine Allyl- oder Vinylgruppe enthalten. In einigen Ausführungsformen kann das Tensid eine Polyoxyalkylgruppe (z. B. Polyoxyethylen oder Polyoxypropylen) enthalten. In einigen Ausführungsformen kann das Tensid eine aromatische Gruppe enthalten, bevorzugt eine Phenylgruppe.

In einigen Ausführungsformen kann das kovalent gebundene Tensid vor der kovalenten Bindung an das Polymer eine Verbindung gemäß Formel (IB), Formel (IIB) oder Gemische davon enthalten: 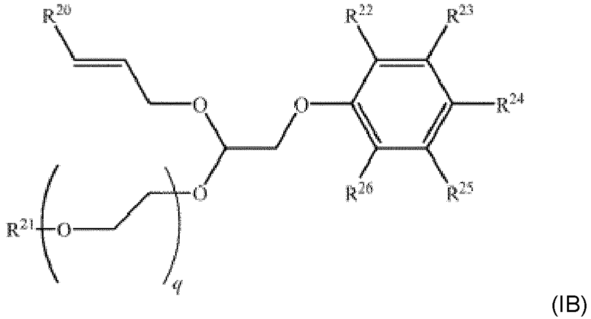 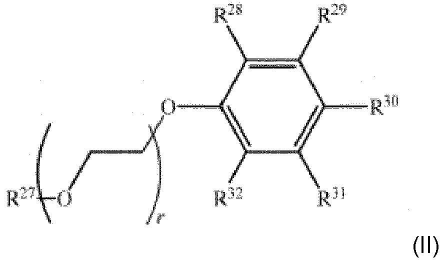 wobei R²¹ und R²⁷ jeweils unabhängig voneinander ein Sulfat sind; R²⁰ eine Wasserstoff- oder Methylgruppe ist; R²², R²³, R²⁴, R²⁵ und R²⁶ sind jeweils unabhängig voneinander eine Wasserstoff- oder C₁-C₆-Alkylgruppe; R²⁸, R²⁹, R³⁰, R³¹ und R³² sind jeweils unabhängig voneinander eine Wasserstoff-, C₁-C₆-Alkylgruppe oder eine C₂-C₆-Alkenylgruppe, vorausgesetzt, dass mindestens eine von R²⁸, R²⁹, R³⁰, R³¹ und R³² eine C₂-C₆-Alkenylgruppe ist; q und r sind jeweils unabhängig voneinander 5-30. In einigen Ausführungsformen können R²¹ und R²⁷ jeweils unabhängig voneinander SO₂O⁻X⁺ sein, wobei X⁺ Na oder NH₄⁺ ist. In einigen Ausführungsformen können R²², R²³, R²⁴, R²⁵ und R²⁶ jeweils unabhängig voneinander eine Wasserstoff- oder verzweigte C₁-C₆-Alkylgruppe sein. In einigen Ausführungsformen sind R²², R²³, R²⁵ und R²⁶ jeweils Wasserstoff und R²⁴ ist eine t-Butylgruppe. In einigen Ausführungsformen sind R²⁸, R²⁹, R³⁰, R³¹ und R³² jeweils Wasserstoff oder eine C₂ -C₄-Alkenylgruppe. In einigen Ausführungsformen sind q und r jeweils unabhängig voneinander 5-15. In einigen Ausführungsformen sind q und r jeweils unabhängig voneinander 15-25. Andere geeignete Tenside, die kovalent an das Polymer gebunden sein können, schließen diejenigen ein, die in der veröffentlichten US-Patentanmeldung Appl. Nr. 2001/0020064 und Journal of Applied Polymer Science, Vol. 109, 2275-2282 (2008).

In einigen Ausführungsformen hat das Polymer, das ein kovalent gebundenes Tensid enthält, ein zahlenmittleres Molekulargewicht (Mn) von etwa 10.000 g/mol bis etwa 200.000 g/mol. In einigen Ausführungsformen hat das Polymer ein zahlenmittleres Molekulargewicht (Mn) von etwa 50.000 g/mol bis etwa 150.000 g/mol. In einigen Ausführungsformen hat das Polymer ein gewichtsmittleres Molekulargewicht (Mw) von etwa 50.000 g/mol bis etwa 1.000.000 g/mol. In einigen Ausführungsformen hat das Polymer ein gewichtsmittleres Molekulargewicht (Mw) von etwa 100.000 g / mol bis etwa 500.000 g / mol.

In einigen Ausführungsformen liegt das polymere Bindemittel in einer Menge von etwa 5 Gew.-% bis etwa 60 Gew.-% vor, bezogen auf das Gesamtgewicht der ersten Zusammensetzung. In einigen Ausführungsformen liegt das polymere Bindemittel in einer Menge von etwa 5 Gew.-% bis etwa 50 Gew.-%, etwa 5 Gew.-% bis etwa 40 Gew.-%, etwa 5 Gew.-% bis etwa 30 Gew.-% oder etwa 5 Gew.-% bis etwa 25 Gew.-% vor, bezogen auf das Gesamtgewicht der ersten Zusammensetzung.

Die zweite Komponente umfasst ein Koaleszenzmittel. Der Begriff "Koaleszenzmittel" im Sinne der vorliegenden Erfindung beschreibt eine Substanz mittels der durch die Vermischung mit der ersten Komponente, eine wässrige Dispersion, ein schneller Zusammenschluss der einzelnen Partikel in der wässrigen Dispersion gewährleistet wird. Durch das Koaleszenzmittel ergeben sich aus der wässrigen Dispersion in kürzester Zeit zwei kohärente Phasen.

Das Koaleszenzmittel der zweiten Komponente kann die folgenden Verbindungen umfassen: Dialkylaminoalkyl(meth)acrylatpolymere, Hexosanpolymere, montmorillonithaltiger Ton, Chitosan, Poly[oxyalkylen(dialkylimino)alkylen]polymere, Epihalogenhydrin/Dialkylaminpolymere, Polydiallydialkylammoniumhalogenidpolymere, Polyepiamine, Dialkylamin-Epi-Halogenidhydrin Elektrolyte, Halogen enthaltenden Dialkylamin-Epi-Halogenidhydrin-Alkylendiamin Polymere, Dimethylaminoethylmethacrylat-Schwefelsäuresalz, quaternäres Ammoniumsalz von Dimethylaminoethylmethacrylat-Methylchlorid, quaternäres Ammoniumsalz von Dimethylaminoethylmethacrylat-Methylsulfat, quaternäres Ammoniumsalz von Dimethylaminoethylacrylat-Methylchlorid, Acrylamidopropyltrimethylammoniumchlorid, Aluminiumhydroxychlorid, Aluminiumsulfat, Zinkchlorid, Eisenchlorid, Kalziumchlorid, Magnesiumhydroxid, Kalziumpropionat, Kalziumpolyphosphat, Kaliumtripolyphosphat, Zinkammoniumbicarbonat, Zinkammoniumnitrat, Zinkammoniumacetat, Natriumchlorid, Kaliumchlorid, Kaliumbromid, Natriumsulfat, Magnesiumsulfat, Kupfersulfat, Zinksulfat, Eisen(lll)sulfat, Eisen(ll)sulfat, Magnesiumchlorid, Magnesiumcarbonat, Alaun, Calciumphosphat, Magnesiumphosphat, Zinkphosphat, Calciumpantothenat, Glycincalciumsalz, Alanincalciumsalz, Serincalciumsalz, Threonincalciumsalz, Methionincalciumsalz, Phenylalanincalciumsalz, Calciumaspartat, Natriumoxalat, Calciumacetat, Magnesiumacetat, Calciumpantothenat, Glycincalciumsalz, Alanincalciumsalz, Serincalciumsalz, Threonincalciumsalz, Methionincalciumsalz, Phenylalanincalciumsalz, Calciumaspartat, Polyphosphorsäure oder eine Kombination von zwei oder mehr davon.

In einigen Ausführungsformen kann das Koaleszenzmittel in einer Menge von etwa 0,01 Gew.-% bis etwa 20 Gew.-% vorliegen, bezogen auf ein Gesamtgewicht der ersten Zusammensetzung. In einigen Ausführungsformen kann das Koaleszenzmittel in einer Menge von etwa 0,1 Gew.-% bis etwa 20 Gew.-%, etwa 1 Gew.-% bis etwa 15 Gew.-%, etwa 1 Gew.-% bis etwa 10 Gew.-%, etwa 1 Gew.-% bis etwa 5 Gew.-% vorliegen oder etwa 0,1 Gew.-% bis etwa 5 Gew.-%, bezogen auf ein Gesamtgewicht der ersten Zusammensetzung.

In einigen Ausführungsformen kann das Koaleszenzmittel in einer Menge von etwa 0,01 Gew.-% bis etwa 20 Gew.-% vorliegen, bezogen auf ein Gesamtgewicht der zweiten Zusammensetzung. In einigen Ausführungsformen kann das Koaleszenzmittel in einer Menge von etwa 0,1 Gew.-% bis etwa 20 Gew.-%, etwa 1 Gew.-% bis etwa 15 Gew.-%, etwa 1 Gew.-% bis etwa 10 Gew.-%, etwa 1 Gew.-% bis etwa 5 Gew.-% vorliegen oder ungefähr 0,1 Gew.-% bis ungefähr 5 Gew.-%, bezogen auf ein Gesamtgewicht der zweiten Zusammensetzung. In einigen Ausführungsformen kann das Koaleszenzmittel in einer Menge von etwa 0,01 Gew.-% bis etwa 20 Gew.-% vorliegen, bezogen auf ein Gesamtgewicht der Zusammensetzung. In einigen Ausführungsformen kann das Koaleszenzmittel in einer Menge von etwa 0,1 Gew.-% bis etwa 20 Gew.-%, etwa 1 Gew.% bis etwa 15 Gew.-%, etwa 1 Gew.-% bis etwa 10 Gew.-%, etwa 1 Gew.-% bis etwa 5 Gew.-% vorliegen oder ungefähr 0,1 Gew.-% bis ungefähr 5 Gew.-%, bezogen auf ein Gesamtgewicht der Zusammensetzung.

Damit die Brandschutzzusammensetzung das Bauteil, auf das sie aufgebracht wird, im Brandfall vor Feuer oder gegen große Hitzeeinwirkung schützen kann, ist es erforderlich, dass die Brandschutzzusammensetzung nach der Aushärtung eine isolierende Schicht bildet, die sogenannte Brandschutzbeschichtung.

Zur Gewährleistung eines ausreichenden Brandschutzes beträgt der Feststoffanteil der Brandschutzzusammensetzung erfindungsgemäß mindestens 50 Gew.-% bezogen auf das Gesamtgewicht der Brandschutzzusammensetzung. Der Begriff "Feststoffanteil" im Sinne der vorliegenden Erfindung beschreibt den Anteil der Verbindungen in der Zusammensetzung, die bei Raumtemperatur fest sind. Hiervon ausgenommen sind ggf. bei Raumtemperatur feste Bindemittel, welche in der Brandschutzzusammensetzung enthalten sein können. Der Feststoffanteil der Brandschutzzusammensetzung lässt sich somit über den Füllstoffgehalt der Zusammensetzung berechnen. Bevorzugt liegt der Feststoffanteil in einem Bereich von 50 Gew.-% bis 80 Gew.-%, bevorzugt in einem Bereich von 55 Gew.-% bis 80 Gew.-%, weiter bevorzugt in einem Bereich von 60% bis 78% Gew.-% und noch weiter bevorzugt in einem Bereich von 62% bis 75% Gew.-%.

Erfindungsgemäß umfasst die erste und/oder die zweite Komponente mindestens ein dämmschichtbildendes Brandschutzadditiv, wobei das dämmschichtbildende Brandschutzadditiv sowohl eine einzelne Verbindung als auch ein Gemisch von mehreren Verbindungen umfassen kann.

Zweckmäßig werden als dämmschichtbildende Brandschutzadditive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant, der zudem eine hohe Lagerstabilität in wasserbasierten Dispersionen aufweist, kommen bevorzugt Verbindungen auf Basis von Pentaerithryt in Frage, bei denen zudem die freien Hydroxidgruppen durch weitere Substituenten geschützt werden. Beispiele dafür sind Pentaerythritol Tetraacetat, Pentaerythritol Tetraacrylate und Pentraerythritol Tetrabenzoat.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Säurebildner bzw. Dehydrierungskatalysatoren, die zusätzlich auch eine hohe Lagerstabilität in wasserbasierten Dispersionen aufweisen, kommen die in intumeszierenden Brandschutzformulierungen üblicherweise verwendeten und dem Fachmann bekannten Verbindungen in Betracht, insbesondere ein Salz oder ein Ester einer anorganischen, nicht flüchtigen Säure, ausgewählt unter Schwefelsäure, Phosphorsäure oder Borsäure. Im Wesentlichen werden beschichtete phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Um jedoch gleichzeitig die Lagerstabilität der wasserbasierten Dispersion zu erhöhen, eignen sich beschichtete oder/und verkapselte Säurebildner hervorragend in der hier vorliegenden Zusammensetzung. Beispiele hierfür sind die kommerziell erhältlichen Produkte Exolit AP 462, Exolit AP 750 Exolit AP435, FR Cros C70, FR Cros 486, FR Cros 584 und Exflam APP 205, der Firmen Clariant, Budenheim und Wellchem. Diese Produkte weisen jeweils eine Beschichtung beispielsweise durch Melamin, auf Silikonbasis, oder Epoxybasis auf.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Vorzugsweise ist das dämmschichtbildende Additiv in der Brandschutzzusammensetzung in einem Anteil von mindestens 50 Gew.-% enthalten, wobei das dämmschichtbildende Additiv sowohl in der ersten Komponente alleine als auch in der zweiten Komponente alleine oder in der ersten und der zweiten Komponente enthalten sein kann, bevorzugt in der zweiten Komponente. Bevorzugt liegt der Anteil an dämmschichtbildenden Additiv in einem Bereich von 50 Gew.-% bis 80 Gew.-%, bevorzugt in einem Bereich von 55 Gew.-% bis 80 Gew.-%, weiter bevorzugt in einem Bereich von 60% bis 78% Gew.-% und noch weiter bevorzugt in einem Bereich von 62% bis 75% Gew.-% bezogen auf das Gesamtgewicht der Brandschutzzusammensetzung.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Brandschutzbeschichtung auswirkt, wird zu den eben aufgeführten Brandschutzadditiven bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TCPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-% in der Zusammensetzung enthalten sein.

Erfindungsgemäß umfasst die Brandschutzzusammensetzung mindestens ein Verlaufsmittel. Der Begriff Verlaufsmittel im Sinne der vorliegenden Erfindung beschreibt eine Verbindung mittels derer die Viskosität der Zusammensetzung abgesenkt wird. Die erfindungsgemäße Zugabe eines Verlaufsmittels ermöglicht den Einsatz sehr hoher Feststoffanteile in der Zusammensetzung ohne Beeinträchtigung der Oberflächeneigenschaften, insbesondere der Oberflächenrauigkeit, einer Beschichtung, die aus der entsprechenden Zusammensetzung hergestellt wurde. Optional wird der Verlauf durch die Erhöhung der Oberflächenspannung durch das Verlaufsmittel bewirkt. Vorzugsweise kommen als Verlaufsmittel Silikon-basierte Verbindungen (PDMS polydimethylsiloxane modified), Fluorcarbonbasierte Verbindungen (modified fluorocarbons), acrylat basierte Verbindungen (polyacrylate), oder Kohlenhydrat basierte Produkte zum Einsatz. Beispielhaft seien hier die kommerziell erhältlichen Produkte BYK 3760, Modaflow AQ3000, Modaflow AQ3025 und Afcone 3034 genannt. Die Verlaufsmittel können bevorzugt in einer Menge von 0,1% bis 2,0% Gew.-%, bevorzugt 0,3% bis 1,5% Gew.-% in der Zusammensetzung enthalten sein bezogen auf das Gesamtgewicht der Zusammensetzung.

Zusätzliche Additive wie Verdicker, Rheologieadditive und Füllstoffe können der Zusammensetzung zugegeben werden und verbessern die Lagerstabilität der Formulierung signifikant. Um den "Hold up" (Schichtdicke, die mit einem Applikationsvorgang aufgebracht werden kann) in der Zusammensetzung zu verbessern, sind diese Verdicker und Rheologieadditive nicht notwendig, da dieser schon bei der Ausgangszusammensetzung hervorragend ist, jedoch helfen diese Additive die Lagerstabilität deutlich zu verbessern. Als Rheologieadditive, wie Anti-Absetzmittel, Antiablaufmittel und Thixotropiemittel, werden vorzugsweise Methyl Cellulose, Hydroxyethyl Cellulose, Carboxymethyl Cellulose, Hydroxypropyl Cellulose, hydrophob modifizierte hydroxyethyl Cellulose, Alkali schwellbare Emulsionen, hydrophobe Alkali schwellbare Emulsionen, hydrophob modifizierte ethoxylierte Urethan-Copolymere, hydrophob modifizierte Cellulose Ether, oder Hectorite Lehm. Beispiele von kommerziell erhältlichen Verdickungsmitteln sind Natrosol 250HHR, Aqualon 9M31F, Benton Gel 1002v, Natrosol Plus 330, Acrysol TT-615, oder Acrysol ASO-60ER.

Die Brandschutzzusammensetzung kann zusätzlich gegebenenfalls übliche Hilfsmittel, wie Lösungsmittel, etwa Xylol oder Toluol, oder Texanol enthalten. Die Nutzung von Texanol ist durch seinen vergleichsweise hohen Siedepunkt hilfreich, um den Verdampfungspunkt zu senken. Zudem eignet sich die Zugabe eines Lösungsmittels sehr gut, um die Sprühbarkeit des Produkts zu verbessern, da die Viskosität der Formulierung, wie allseits bekannt ist, durch die Zugabe von Lösungsmittel verringert wird.

Die erfindungsgemäße Zusammensetzung kann als Zwei- oder Mehrkomponenten-System konfektioniert werden.

Die Zusammensetzung kann durch Sprühen durch ein Mehrkomponentensprühgerät auf das Substrat, insbesondere ein metallisches Substrat aufgebracht werden. Bevorzugt wird die Zusammensetzung mittels eines Airless-Sprühverfahrens aufgebracht.

Die erfindungsgemäße Zusammensetzung ist besonders als Beschichtung, insbesondere als Brandschutzbeschichtung, bevorzugt als sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen. Ein weiterer Gegenstand der vorliegenden Erfindung ist daher eine Beschichtung hergestellt aus der erfindungsgemäßen Brandschutzzusammensetzung.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung. Ein weiterer Gegenstand der vorliegenden Erfindung ist daher auch ein Substrat umfassend eine erfindungsgemäße Beschichtung bzw. eine erfindungsgemäßen Brandschutzzusammensetzung.

Ein weiterer Gegenstand der Erfindung ist auch die Verwendung der erfindungsgemäßen Zusammensetzung zur Herstellung von Beschichtungen mit verbesserten Oberflächeneigenschaften, insbesondere als Brandschutzbeschichtung von metallischen und/oder nicht metallischen Substraten, ganz besonders für Konstruktionselemente oder Bauelemente aus Stahl, Beton, Holz und anderen Materialien, wie etwa Kunststoffe.

Die folgenden Beispiele dienen der weiteren Erläuterung der Erfindung.

### AUSFÜHRUNGSBEISPIELE

Zur Herstellung der erfindungsgemäßen Brandschutzzusammensetzung BS1 bis BS4 wurden die in der nachfolgenden Tabelle 1 aufgeführten Bestandteile miteinander vermischt.

**Tabelle 1: Bestandteile der Brandschutzzusammensetzungen BS1 bis BS4 in Gew.-%.**

| **Bestandteil** | Funktion | **BS1** | **BS2** | **BS3** | **BS4** |
|---|---|---|---|---|---|
| **Komponente 1** | | | | | |
| Acronal 4750 | Bindemittel | 18 | 18 | 18 | 18 |

| **Komponente 2** | | | | | |
|---|---|---|---|---|---|
| Wasser | Lösungsmittel | 15 | 15 | 15 | 15 |
| TiO₂ aus Schwefelsäureverfahren" (Kronos 2056) | Pigment - und Aschekrustenbildner | 13 | 13 | 13 | 13 |
| Dispex Ultra Fa 4416 | Dispergier- und Benetzungsadditiv | 0,80 | 0,80 | 0,80 | 0,80 |
| Foamstar ST 2438 | Entschäumer | 0,2 | 0,2 | 0,2 | 0,2 |
| Exolit AP462 Ammoniumpolyphosphate Melamin-beschichtet | Aschekrustenbildner | 30,2 | 30,2 | 30 | 28,8 |
| Monopentaerythritol | Kohlenstoffquelle | 11 | - | - | |
| Pentaerythritoltetraacetat | Kohlenstoffquelle | - | 11 | 10,8 | 10,4 |
| strukturmodifizierte, mit Hexamethyldisilazan nachbehandelte Pyrogene-Kieselsäure (Aerosil R8200) | | 0,8 | 0,8 | 0,8 | 0,8 |
| Carbonfasern SFC | | - | - | - | 1 |
| Rizinusöl | | - | - | 0,2 | 0,2 |
| Melamin | Blähmittel | 11 | 11 | 10,7 | 10,7 |
| Silikonhaltiges Oberflächenadditiv (BYK 3760) | Verlaufsmittel | - | - | - | 0,6 |
| Benton Gel 1002v Mischung aus Cyclopentasiloxan and Disteardimonium Hectorit and Propylen Carbonate | Rheologieadditiv | - | - | 0,5 | 0,5 |

## Patentansprüche

1. Wässrige Brandschutzzusammensetzung umfassend eine erste Komponente und eine zweite Komponente, wobei die erste Komponente ein polymeres Bindemittel umfassend ein hyperverzweigtes Polymer und/oder ein Polymer mit einem kovalent gebundenen Tensid enthält und die zweite Komponente ein Koaleszenzmittel enthält, wobei die Brandschutzzusammensetzung ferner mindestens ein dämmschichtbildendes Brandschutzadditiv und mindestens ein Verlaufsadditiv umfasst, welche vor dem Vermischen der ersten und der zweiten Komponente in der ersten und/oder in der zweiten Komponente enthalten ist, **dadurch gekennzeichnet, dass** der Feststoffanteil der Brandschutzzusammensetzung mindestens 50 Gew.-% beträgt.

2. Wässrige Brandschutzzusammensetzung gemäß Anspruch 1, **dadurch gekennzeichnet, dass** das hyperverzweigte Polymer das Reaktionsprodukt eines säurefunktionellen Harzes und eines Epoxids enthält, wobei das hyperverzweigte Polymer eine Carboxylgruppe, eine Hydroxylgruppe, eine Aminogruppe, eine Uredogruppe, eine Acetoacetoxygruppe, eine Diacetongruppe oder eine Kombination von zwei oder mehr davon umfasst.

3. Wässrige Brandschutzzusammensetzung gemäß einem der Ansprüche 1 oder 2, **dadurch gekennzeichnet, dass** hyperverzweigte Polymer ein Mikrogel ist.

4. Wässrige Brandschutzzusammensetzung gemäß Anspruch 1, **dadurch gekennzeichnet, dass** das Polymer mit einem kovalent gebundenen Tensid ein oder mehrere polymerisierte Monomere enthält ausgewählt aus der Gruppe bestehend aus Acrylsäure, Methacrylsäure, Alkylacrylat, Alkylmethacrylat, Acrylnitril, Styrol, Vinyl enthaltende Monomere oder eine Kombination von zwei oder mehr davon

5. Wässrige Brandschutzzusammensetzung gemäß einem der Ansprüche 1 oder 4, **dadurch gekennzeichnet, dass** das kovalent gebundene Tensid ein anionisches Tensid enthält.

6. Wässrige Brandschutzzusammensetzung gemäß Anspruch 5, **dadurch gekennzeichnet, dass** das anionische Tensid eine Sulfat-, Sulfonat-, Carboxylat- oder Phosphatgruppe umfasst.

7. Wässrige Brandschutzzusammensetzung gemäß einem der vorhergehenden Ansprüche, **dadurch gekennzeichnet, dass** das Verlaufsmittel ausgewählt ist aus der Gruppe bestehend aus Silikon-basierten Verbindungen, Fluorcarbonbasierten Verbindungen, Acrylat-basierten Verbindungen oder Mischungen daraus.

8. Wässrige Brandschutzzusammensetzung gemäß einem der vorhergehenden Ansprüche, **dadurch gekennzeichnet, dass** die Brandschutzzusammensetzung das dämmschichtbildende Additiv in einem Anteil von 55 Gew.-% bis 80 Gew.-% bezogen auf das Gesamtgewicht enthält.

9. Wässrige Brandschutzzusammensetzung gemäß einem der vorhergehenden Ansprüche, **dadurch gekennzeichnet, dass** das dämmschichtbildende Brandschutzadditiv einen Kohlenstofflieferant, einen Dehydrierungskatalysator und einen Gasbildner umfasst.

10. Wässrige Brandschutzzusammensetzung gemäß einem der vorhergehenden Ansprüche, **dadurch gekennzeichnet, dass** die Brandschutzzusammensetzung als Zwei- oder Mehrkomponenten-System konfektioniert ist.

11. Brandschutzbeschichtung hergestellt aus einer wässrigen Brandschutzzusammensetzung gemäß einem der Ansprüche 1 bis 10.

12. Brandschutzbeschichtung gemäß Anspruch 11, **dadurch gekennzeichnet, dass** die wässrige Brandschutzzusammensetzung mittels eines Airless-Sprühverfahrens auf ein Substrat, vorzugweise auf ein metallisches Substrat, aufgebracht wird.

13. Substrat umfassend eine Brandschutzbeschichtung gemäß einem der Ansprüche 11 oder 12.

14. Verwendung einer Brandschutzzusammensetzung gemäß einem der Ansprüche 1 bis 10 für die Herstellung von Brandschutzbeschichtungen mit verbesserten Oberflächeneigenschaften.
